# EUROPEAN PATENT APPLICATION

(11) **EP 4 529 252 A1**
(43) Date of publication of application: **26.03.2025**
(21) Application number: 23198740.5
(22) Date of filing: 21.09.2023
(51) Int. Cl.: H04W 12/79

(54) **RADIO FREQUENCY FINGERPRINTING**

(71) Applicant: Cujo LLC, Covina, CA 91723 (US)
(72) Inventor: Pykälä, Timo, 02150 Espoo (FI)
(74) Representative: Marks & Clerk LLP

(57) **Abstract**

A present carrier frequency of a present radio signal is randomly adjusted (102) within an acceptable tolerance range by a connected device. The present radio signal is transmitted (108) to an access point by the connected device in a present wireless connection.

## Description

### FIELD

The invention relates to a method, apparatus, and computer program product.

### BACKGROUND

Device identification is a capability to detect and identify a connected device in a home or office local area network (LAN) provided by an access point such as a customer-premises equipment (CPE). Traditionally, the Media (or Medium) Access Control (MAC) address is assigned by a device manufacturer and used in the wireless connection within the LAN for the device identification. But obfuscation techniques, such as MAC randomization, which anonymize and randomize the MAC address to increase privacy, complicate the device identification. Device identification may be aided with radio frequency fingerprinting based on the fact that each radio transceiver transmits a radio signal, which can be distinguished from radio signals by other transceivers because the hardware of each radio transceiver has minute imperfections within manufacturing tolerances, which cause unique characteristics into the transmitted radio signal. Further sophistication related to the radio frequency fingerprinting is desirable. For example, the radio frequency fingerprinting may need to be disabled to restore privacy, or enabled in trusted networks but disabled in other networks.

### SUMMARY

According to an aspect of the disclosure, there is provided subject matter of independent claims.

One or more examples of implementations are set forth in more detail in the accompanying drawings and the detailed description.

### BRIEF DESCRIPTION OF DRAWINGS

Some examples will now be described with reference to the accompanying drawings, in which:
FIG. 1A, FIG. 1B, and FIG. 1C are flowcharts illustrating examples of a method;
FIG. 2 is a block diagram illustrating an example implementation environment for the method;
FIG. 3 is a block diagram illustrating a transmitter in a connected device, and a receiver in an access point;
FIG. 4A and FIG. 4B are block diagrams illustrating examples of a connected device;
FIG. 5 is a block diagram illustrating an example of a computing resource; and
FIG. 6A and FIG. 6B are block diagrams illustrating examples of an access point such as a customer-premises equipment.

### DETAILED DESCRIPTION

The following description discloses examples. Although the specification may refer to "an" example in several locations, this does not necessarily mean that each such reference is to the same example(s), or that the feature only applies to a single example. Single features of different examples may also be combined to provide other examples. Words "comprising" and "including" should be understood as not limiting the described examples to consist of only those features that have been mentioned as such examples may contain also features and structures that have not been specifically mentioned. The examples and features, if any, disclosed in the following description that do not fall under the scope of the independent claims should be interpreted as examples useful for understanding various examples and implementations of the invention.

Any flowcharts discussed herein are necessarily discussed in some sequence for purposes of illustration, but unless otherwise explicitly indicated, the examples are not limited to any particular sequence of steps. The use herein of ordinals in conjunction with an element is solely for distinguishing what might otherwise be similar or identical labels, such as "first message" and "second message," and does not imply an initial occurrence, a quantity, a priority, a type, an importance, or other attribute, unless otherwise stated herein. The term "about" used herein in conjunction with a numeric value means any value that is within a range of ten percent greater than or ten percent less than the numeric value. As used herein and in the claims, the articles "a" and "an" in reference to an element refers to "one or more" of the element unless otherwise explicitly specified. The word "or" as used herein and in the claims is inclusive unless contextually impossible. As an example, the recitation of A or B means A, or B, or both A and B. The word "data" may be used herein in the singular or plural depending on the context. The use of "and/or" between a phrase A and a phrase B, such as "A and/or B" means A alone, B alone, or A and B together.

In general, machine learning (ML) is used to overcome the obfuscation techniques. To perform the device identification using machine learning algorithms and device fingerprinting, a wireless connection from a connected device may be intercepted. The intercepted wireless connection may be analyzed to perform radio frequency fingerprinting enabling the device identification. However, to avoid the radio frequency fingerprinting, the connected device is controlled to adjust a carrier frequency of a radio signal randomly within an acceptable tolerance range, which causes a failure in the device identification of the connected device based on the radio frequency fingerprinting.

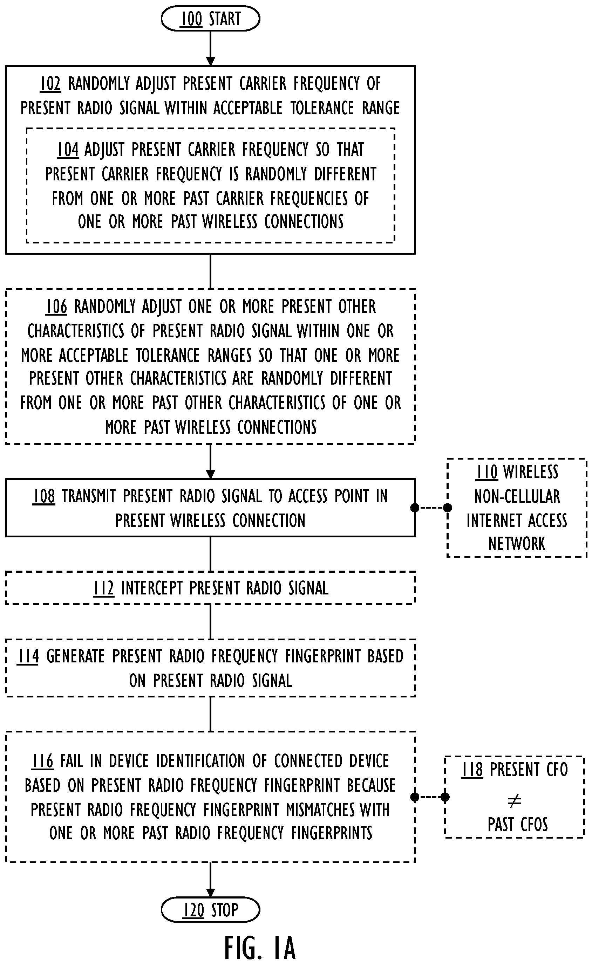

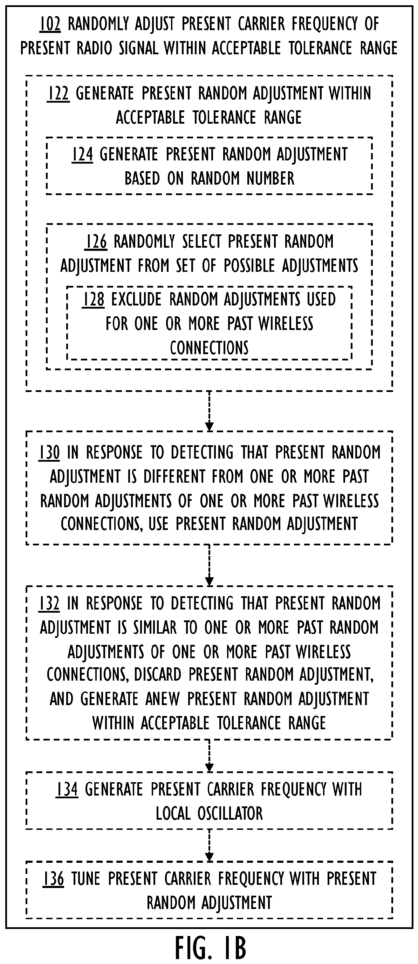

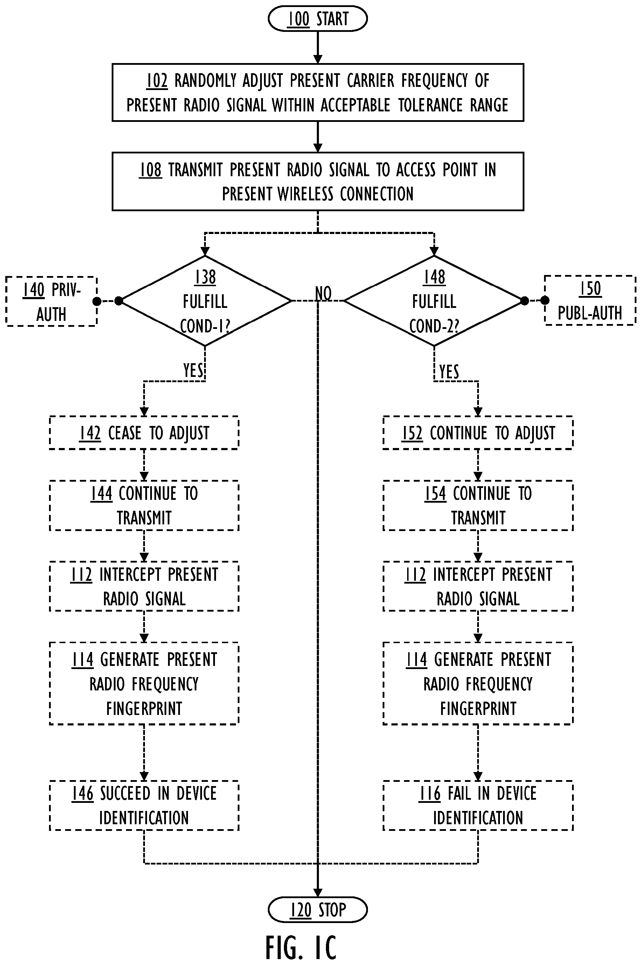

FIG. 1A, FIG. 1B, and FIG. 1C are flowcharts illustrating a method. The method performs operations related to the radio frequency fingerprinting and device identification.

The method starts in 100 and ends in 120. The method may be executed for each wireless connection of a connected device 200 to an access point 230.

The operations are not strictly in chronological order, i.e., no special order of operations is required, except where necessary due to the logical requirements for the processing order. In such a case, the synchronization between operations may either be explicitly indicated, or it may be understood implicitly by the skilled person. If no specific synchronization is required, some of the operations may be performed simultaneously or in an order differing from the illustrated order. Other operations may also be executed between the described operations or within the described operations, and other data besides the illustrated data may be exchanged between the operations.

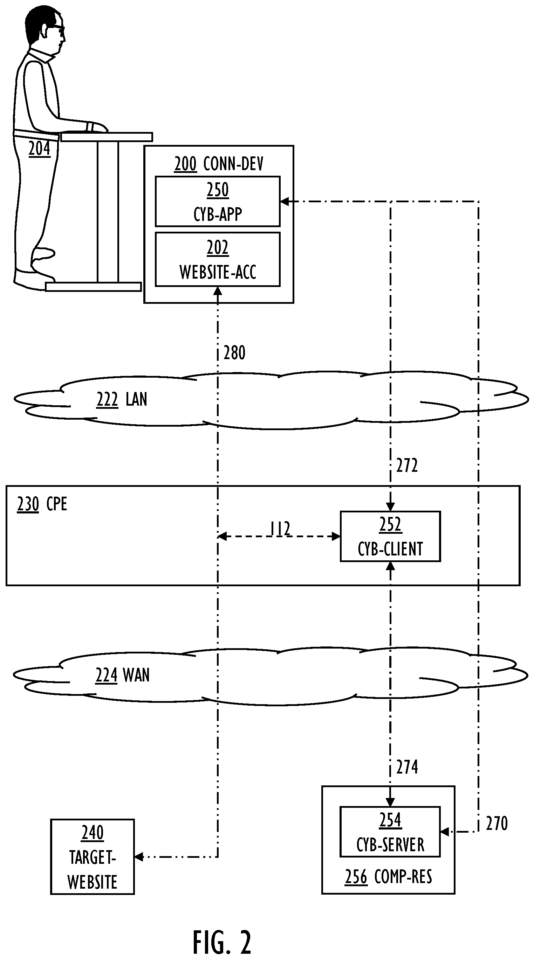

FIG. 2 is a block diagram illustrating an example implementation environment for the method. The method may be a computer-implemented method. The method may operate within a connected device 200, but also partly within an access point 230 and/or a computing resource 256.

First, a present carrier frequency of a present radio signal is randomly adjusted 102 within an acceptable tolerance range by the connected device 200. The acceptable tolerance range may define one or more engineering tolerance parameters related to the present radio signal.

Next, the present radio signal is transmitted 108 to the access point 230 by the connected device 200 in a present wireless connection 280.

The term "randomly" refers to the probability theory, wherein a random (or stochastic) process may be defined as a sequence of random variables, wherein an index of the sequence is time. In other words, each consecutive wireless connection of the connected device 200 has an own, random adjustment of the carrier frequency of the radio signal. As a result, the carrier frequency randomly varies from one wireless connection of the connected device 200 to another wireless connection of the connected device 200.

With these two operations 102, the radio frequency fingerprinting may be disrupted so that the device identification of the connected device 200 will fail. Various aspect of the radio frequency fingerprinting are described in the following patent publications, incorporated herein by reference in all jurisdictions where applicable: US 10,594,727 B2, US 10,693,576 B2, US 10,742,461 B2, US 10,749,898 B2, and US 2022/0399920 A1.

The radio frequency fingerprinting may be implemented so that the present radio signal, which is transmitted to the access point 230 in the present wireless connection 280, is intercepted 112. A present radio frequency fingerprint is then generated 114 based on the (intercepted) present radio signal. A device identification of the connected device 200 based on the present radio frequency fingerprint fails 116 because the present radio frequency fingerprint mismatches with one or more past radio frequency fingerprints of the connected device 200. In other words, it is failed 116 to identify the connected device 200.

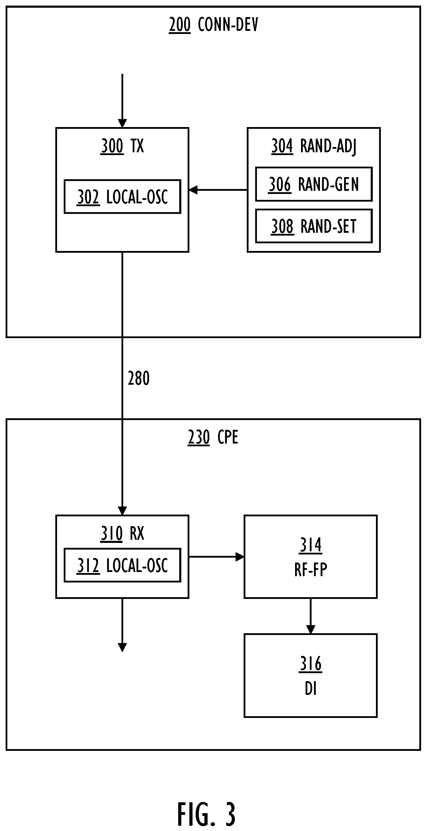

FIG. 3 is a block diagram illustrating an example of a transmitter 300 in the connected device 200, and a receiver 310 in the access point 230. Note that the transmitter 300 is usually a part of a radio transceiver in the connected device 200, and the receiver 310 is a part of a radio transceiver in the access point 230. A random adjuster 304 is configured to randomly adjust 102 the present carrier frequency of the present radio signal to be transmitted by the transmitter 300 within the acceptable tolerance range. The present radio signal is then received by the receiver 310, and a radio frequency fingerprint generator 314 is configured to generate 114 the present radio frequency fingerprint based on the received present radio signal. A device identification analyzer 316 is configured to attempt a device identification of the connected device based on the present radio frequency fingerprint, but the device identification will fail 116 because the present radio frequency fingerprint mismatches with one or more past radio frequency fingerprints of the connected device 200.

The adjusting 102 may be implemented so that the present carrier frequency is adjusted 104 so that the present carrier frequency is randomly different from one or more past carrier frequencies of one or more past wireless connections of the connected device 200. The past wireless connections of the connected device 200 are usually to the same (home/office) access point 230, but if the device identification operates not only within a single access point 230, but within a set of access points (such as within all access points of a specific network service provider, or within a subset of all access points of the specific network service provider), then the past wireless connections of the connected device 200 have been to access points within the set or subset of the access points. As a result of such adjustment 104, a present radio frequency fingerprint, which comprises a present carrier frequency offset (CFO) of the connected device 200, is randomly different 118 from past carrier frequency offsets of the one or more past radio frequency fingerprints (obtained from the past wireless connections) of the connected device 200. The difference between present and past wireless connection is of a temporal nature: the past wireless connection to the access point has been closed before the present wireless connection is started. For example: the user 204 of the connected device 200 is at home and browsing the Internet via a wireless connection to the access point 230. Then the user 204 goes to the work, and the (past) wireless connection to the access point 230 is closed. After the work, the user 204 returns to home, and the connected device 200 start a new (present) wireless connection to the access point 230. The adjusting 102 may be performed after each wireless connection ends: as the past wireless connection ends, the adjusting 102 is performed, whereby as the present wireless connection starts, the present carrier frequency is already from the start different from the past carrier frequency.

In an example, the adjusting 102 operation may be implemented with a series of operations 122, 130, 132, 134 and 136. A present random adjustment is generated 122 within the acceptable tolerance range. In response to detecting 130 that the present random adjustment is different from one or more past random adjustments of one or more past wireless connections, the present random adjustment is used. In response to detecting 132 that the present random adjustment is similar to the one or more past random adjustments of the one or more past wireless connections, the present random adjustment is discarded, and the present random adjustment within the acceptable tolerance range is generated 122 anew. The present carrier frequency is generated 134 with a local oscillator 302, and the present carrier frequency is tuned 136 with the present random adjustment.

In an example, the generating 122 operation may be implemented so that the present random adjustment is generated 124 based on a random number. The random adjuster 304 may include a random number generator 306. The random number generator 306 is configured to generate a sequence of numbers that cannot be predicted better than by random chance. Hardware random number generators or pseudorandom number generators may be applicable. The degree of randomness may need to be such that the device identification 316 is not able to detect a pattern in the randomness. A series of random numbers may be generated outside of the connected device 200, in the computing resource 256, for example, and the series is then transmitted to the connected device 200, whereupon the connected device 200 selects consecutive random numbers from the series for consecutive wireless connections. In this way, the random number generation may use more processing power of the centralized computing resource 256 than would be available in the connected device 200.

In an alternative example, the generating 122 operation may be implemented so that the present random adjustment is randomly selected 126 from a set of possible adjustments. Furthermore, the selecting 126 operation may include an operation of excluding 128 random adjustments used for the one or more past wireless connections of the connected device 200. The random adjuster 304 may include a data structure 308 configured to store the set of possible adjustments.

Carrier frequency offset (CFO) is a phenomenon caused by a frequency difference between a frequency generated by the local oscillator 302 in the transmitter 300 of the connected device 200, and a frequency generated by a local oscillator 312 in the receiver 310 of the access point 230. The frequency difference causes that the local oscillator signal for down-conversion in the receiver does not synchronize with the carrier signal contained in the received signal. Besides the frequency mismatch, the Doppler effect may also cause the carrier frequency offset as the connected device 200 with the transmitter 300 is moving, whereas the access point 230 with the receiver 310 is stationary. The carrier frequency offset causes that the received radio signal is shifted in frequency. In an orthogonal frequency-division multiplexing (OFDM) radio system, the carrier frequency offset must be kept within certain limits so that the orthogonality among sub-carriers can be maintained. Otherwise, inter-carrier interference (ICI) may be caused into the radio signal. In practice, the local oscillators 302, 312 never oscillate at exactly the same frequency. Telecommunication system standards usually set a requirement for the precision of the local oscillator 302, 312. In the IEEE 802.11 standard for wireless local area network (WLAN), the local oscillator precision tolerance is specified as less than ±20 parts per million (ppm), whereby the resulting carrier frequency offset caused by frequency difference is in the range from -40 ppm to +40 ppm. If the carrier frequency is 2.4 GHz, for example, then the local oscillator tolerance is ±48 kHz, and the maximum carrier frequency offset ±96 kHz. In comparison, the Doppler effect is in the magnitude of hundreds of hertz, i.e., much less than the oscillator generated mismatch. The local oscillators 302, 312 may provide a single reference frequency to a frequency synthesizer (not illustrated in FIG. 3). The present carrier frequency of 2.4 GHz may be adjusted randomly within the acceptable tolerance range of ±96 kHz, for example. The true frequency provided by the local oscillator 302 may need to be determined so that the adjustments cause the carrier frequency to remain at 2.4 GHz within the acceptable tolerance range of ±96 kHz, for example.

The present carrier frequency of the present radio signal may randomly be adjusted 102 within the acceptable tolerance range so that the local oscillator 302 is configured to generate the carrier frequency, and the random adjuster 304 is configured to generate a present random adjustment, which is used to tune 136 the present carrier frequency generated by the local oscillator 302 in the connected device 200. As the present radio signal of the present wireless connection 280 is received in the access point 230, a carrier frequency is generated by the local oscillator 312.

Besides the carrier frequency offset, radio frequency and analog parts of the radio transmitter 300 in the connected device 200 and radio frequency and analog parts in the radio receiver 310 in the access point 230 may cause other distortions into the present radio signal, including, but not being limited to: a sampling clock offset (= a difference in a sampling clock frequency between the transmitter and the receiver), an IQ imbalance (= a phase difference and a gain difference between an in-phase signal path and a quadrature signal path in the transmitter), and a phase noise (= noise spectrum at either side of the radio signal as a result of a phase jitter in a timing accuracy of the local oscillator).

Accordingly, in an example the method further comprises the operation of randomly adjusting 106, by the connected device 200, one or more present other characteristics of the present radio signal within one or more acceptable tolerance ranges of the one or more present other characteristics so that the one or more present other characteristics are randomly different from one or more past other characteristics of one or more past wireless connections. The present radio signal transmitted to the access point 230 in the present wireless connection 280 is then intercepted 112. A present radio frequency fingerprint is generated 114 based on the present radio signal. A device identification of the connected device 200 based on the present radio frequency fingerprint fails 116 because the present radio frequency fingerprint mismatches with one or more past radio frequency fingerprints of the connected device. In addition to the explained mismatch between carrier frequency offsets of present and past wireless connections, the failing 116 is caused by one or more of the other randomly adjusted 106 distortions into the radio signal of the present wireless connection 280 by the connected device 200 .

As used herein, the term "connected device" 200 refers to a physical device with communication capabilities. The access point 230 may be a customer-premises equipment (CPE). The CPE 230 is configured to provide a local area network (LAN) 222 enabling a wireless connection 280 with the connected device 200, and an access to a wide area network (WAN) 224 such as the Internet. In the wireless connection 280, the data packets may be transferred from and to the connected device 200.

In an example, the access point 230 is configured to generate a wireless non-cellular internet access network 110, 222. The access point 230 may be configured to operate at a home or an office of a user 204 of the connected device 200. The access point 230 may also be configured to operate out of the home or the office of the user 204 as a hotspot serving the connected devices 200 in a public place such as a cafe, city center, shopping mall, airport, an arena, etc.

As shown in FIG. 2, the connected device 200 may be configured to execute a website access application 202, such as web user interface application (a web browser, for example), or a stand-alone application (a mobile app, for example), and as a result, data communication is conveyed in the wireless connection 280 from the connected device 200 to an accessed website 240 via the LAN 222 and the WAN 224. The website access application 202 may automatically cause the data communication, or, alternatively, the data communication may be generated as a result of an action by a user 204 through user interface controls of the website access application 202.

The connected device 200 may create the wireless connection 280 using a packet protocol for the website access application 202 of the connected device 200 to the target website 240. The target website 240 may host a server application enabling access by the website access application 202. The packet protocols include, but are not limited to, Transmission Control Protocol/Internet Protocol (TCP/IP), User Datagram Protocol/Internet Protocol (UDP/IP), and QUIC, which establishes a multiplexed transport on top of the UDP. Various Hypertext Transfer Protocol/Hypertext Transfer Protocol Secure (HTTP/HTTPS) requests may then be transferred in the wireless connection 280 (using TCP streams or UDP datagrams, for example). In the Internet Protocol suite, the connection 280 is operated in a link layer, an internet layer, and a transport layer, and the requests transmitted in the wireless connection 280 are operated in an application layer.

The radio signal of the wireless connection 280 may be intercepted 112 by a cybersecurity client 252 operating in the access point 230. The intercepted radio signal may be analyzed in order to perform a device identification procedure, by the cybersecurity client 252, possibly augmented by a cybersecurity server 254 operating in a networked computing resource 256. Machine learning algorithms may use a number of other data items (such as device-specific unique radio interface characteristics, and other active and historic unique identifiers related to the connected apparatus and its communication) besides the radio frequency fingerprinting to enable the device identification.

In the above-described way, the device identification may be performed. The analysis of the intercepted radio signal may include collecting device traffic metadata and filtering relevant identification data points from network flow sent and received by the connected device 200 in the LAN 222 of the CPE 230. In addition to the analysis of raw data, or as an alternative, refined data (such as metadata) such as datasets, markers, connection requests, etc. may be analyzed. A suitable network flow monitoring technology, such as Cisco^{®} NetFlow or alternative network flow monitoring technologies (which may be implemented as a service of the operating system of the CPE 230) may be used to intercept the radio signal. NetFlow, or its equivalents collect IP network traffic as it enters or exits an interface (in the CPE 230, for example), and based on the collected traffic, a source and a destination of the network traffic (in the form of IP addresses) in the wireless connection 280 may be determined. The CPE 230 (or more specifically the cybersecurity client 252 running on the CPE 230) sends the data points extracted from the wireless connection 280 (by the NetFlow, for example) to the cybersecurity server 254. The cybersecurity server 254 feeds the data points to an analysis engine, which analyses the extracted data points and provides a model matching device identifier for the connected device 200 based on the data points. The analysis engine is able to detect that the connected device 200, even if it uses an obfuscated active MAC address, is in fact the connected device 200 that originally used an earlier MAC address. The active MAC address and the one or more earlier MAC addresses may be mapped to each other and stored in a database (or another data storage) of the cybersecurity server 254, and such mapped data may be passed back to a database (or other data storage, or even a cache) of the cybersecurity client 252. The described radio frequency fingerprinting is a part of the device identification.

As used herein, the term "intercepting" refers to user-approved lawful interception or monitoring of the radio signal in the wireless connection 280, with a purpose and goal of increasing cybersecurity related to the connected device 200 and its operating environment. As the radio signal of the wireless connection 280 is intercepted, the data communication is accessed and collected between the transmitting device and the receiving device. The data communication may be intercepted even if the digital data transmission units (such as messages) in the wireless connection 280 are addressed to the receiving device. The intercepting may be implemented so that the wireless connection 280 is passively monitored, i.e., the wireless connection 280 is not affected by the intercepting. Alternatively, if needed, the intercepting may include a seizing of the wireless connection 280, i.e., the wireless connection 280 is actively influenced so that a connection and/or requests and/or responses are blocked until it may be decided whether a cybersecurity action (such as blocking of the wireless connection 280) is required.

As used herein, the term "data communication" refers to the transmission and/or reception of (digital) data by the connected device 200. The data communication is transferred using digital data transmission units over a communication medium such as one or more communication channels in the wireless connection 280 between the connected device 200 and another network node such as the target website 240. Besides over radio interface, the data communication may be conveyed over another transmission medium (implemented by copper wires, or optical fibers, for example). The data are a collection of discrete values that convey information, or sequences of symbols that may be interpreted, expressed as a digital bitstream or a digitized analog signal, including, but not being limited to: text, numbers, image, audio, video, and multimedia. The data may be represented as an electromagnetic signal (such as an electrical voltage or a radio wave, for example). The digital transmission units may be transmitted individually, or in a series over a period of time, or in parallel over two or more communication channels, and include, but are not limited to: messages, protocol units, packets, and frames. One or more communication protocols may define a set of rules followed by the connected device 200 and other network nodes to implement the successful and reliable data communication over the wireless connection 280. The communication protocols may implement a protocol stack with different conceptual protocol layers.

The WAN such as the Internet 224 uses the Internet Protocol suite including TCP/IP and UDP/IP to globally connect computer networks so that communication is enabled between connected devices 200 and various Internet services provided typically by websites 240. The Internet 224 comprises public networks, private networks, academic networks, business networks, government networks, etc. interlinked with various networking technologies. The various services provide access to vast World Wide Web (WWW) resources, wherein webpages may be written with Hypertext Markup Language (HTML) or Extensible Markup Language (XML) and accessed by a browser or another application (such as a mobile app) running in the connected device 200.

From the cybersecurity point of view, the Internet services may be divided between legitimate services and fraud services. Legitimate services operate according to moral and ethical standards enforced by law, police, or social pressure. Fraud services do not follow moral and ethical standards, and often perform criminal acts to disclose, steal or damage electronic data, software, or hardware, or disrupt or misdirect services provided by the electronic data, software, and hardware. Fraud services may be fraudulent to the core, i.e., their only reason for existence is to perform malicious acts, but they may also be legitimate services as such, but being infected with malicious software so as to enable criminal acts. Various configurations of the connected device provided with a cybersecurity application 250, the access point 230 provided with a cybersecurity client 252, and the computing resource 256 provided with a cybersecurity server 254 are used to enforce cybersecurity. As shown in FIG. 2, the cybersecurity application, 250, the cybersecurity client 252, and the cybersecurity server 254 may be communicatively coupled 270, 272, 274 with each other. Note that different service providers, such as network service providers, cloud service operators, and cybersecurity operators, just to name a few, may operate and/or manage the various network nodes shown in FIG. 2.

The access point 230 is located at home or office of a user 204 of the connected device 200. The access point 230 is stationary equipment connected to a telecommunication circuit of a carrier (such as a network service provider (NSP) offering internet access using broadband or fixed wireless technologies) at a demarcation point. The demarcation point may be defined as a point at which the public Internet 224 ends and connects with the LAN 222 at the home or office. In this way, the access point 230 acts as a network bridge, and/or a router.

The access point 230 may include one or more functionalities of a router, a network switch, a residential gateway (RGW), a fixed mobile convergence product, a home networking adapter, an Internet access gateway, or another access product distributing the communication services locally in a residence or in an enterprise via a (typically wireless) LAN 222 and thus enabling the user 204 of the connected device 200 to access communication services of the NSP, and the Internet 224. Note that the access point 230 may also be implemented with wireless technology, such as a 4G or 5G access point 230 configured to exchange a 5G cellular radio network signal with the WAN 224 of a base station operated by the broadband service provider, and generate a Wi-Fi^{®} (or WLAN) or wired signal to implement the LAN 222 to provide access for the connected device 200. Furthermore, the 4G/5G access point 230 performs the conversion between the 4G/5G cellular radio network signal and the Wi-Fi^{®} or wired signal.

Let us next study some further examples with reference to FIG. 1C. The method may operate differently as the connected device 200 is connected to different kinds of access points 230. As will be described, privacy vs. cybersecurity of the connected device 200 may be adjusted as needed. The type (such as trusted or suspicious) of the access point 230 may be determined based on the required authentication as described, but also other applicable ways to determine the type of the access point 230 may be used. The type of the access point 230 may also refer to a known access point and an unknown access point. The known access point 230 may be a trusted access point at the home or the office, and the unknown access point may be a not trusted (or suspicious) access point out of the home or the office (at a public place, for example). The other techniques for determining the type of the access point 230 include, but are not limited to: inspecting a Service Set Identifier (SSID) of the access point 230, inspecting a Basic Service Set Identifier (BSSID) of the access point 230, inspecting a MAC physical address of the access point 230, or signaling an identity of the access point 230 to the connected device 200.

In response to detecting 138-YES that the access point 230 fulfills a first predetermined condition, it is ceased 142 to randomly adjust, by the connected device 200, the present carrier frequency of the present radio signal within the acceptable tolerance range, and it is continued 144 to transmit, from the connected device 200 to the access point 230, the present radio signal in the present wireless connection 280. In other words, present carrier frequency of the present radio signal is no more randomly adjusted 102. The first predetermined condition may comprise a use of a private user authentication 140 controlled by a user managing the access point 230 at a home or an office. The significance of the first predetermined condition is that the access point 230 may be considered to be trusted (or safe regarding the privacy of the user 204). The present radio signal transmitted to the access point in 230 the present wireless connection 280 is then intercepted 112. A present radio frequency fingerprint based on the present radio signal is generated 114. A device identification of the connected device 200 based on the present radio frequency fingerprint succeeds 146 because the present radio frequency fingerprint matches with one or more past radio frequency fingerprints of the connected device 200. In this way, the device identification based on the radio frequency fingerprinting is enabled in the safe home or office wireless network 222.

In response to detecting 148-YES that the access point 230 fulfills a second predetermined condition, it is continued 152 to randomly adjust, by the connected device 200, the present carrier frequency of the present radio signal within the acceptable tolerance range, and it is continued 154 to transmit, from the connected device 200 to the access point 230, the present radio signal in the present wireless connection 280. The second predetermined condition may comprise a use of a public user authentication 150 controlled by a network service provider managing the access point 230 out of a home or an office. The significance of the second predetermined condition is that the access point 230 may be considered to be not trusted (or suspicious regarding the privacy of the user 204). The present radio signal transmitted to the access point 230 in the present wireless connection 280 is intercepted 112. A present radio frequency fingerprint is generated 114 based on the present radio signal. A device identification of the connected device 200 based on the present radio frequency fingerprint fails 116 because the present radio frequency fingerprint mismatches with one or more past radio frequency fingerprints of the connected device 200. In this way, the device identification based on the radio frequency fingerprinting is disabled in the suspicious out of the home or the office wireless network. As was explained earlier, the access point 230 out of the home or the office may operate the wireless network 222 as the hotspot serving the connected devices 200 in the public place.

In an example, the default mode may be that the second predetermined condition is fulfilled 148-YES, whereby the device identification will fail 116. But, if the access point 230 is later detected to fulfill the first predetermined condition 138-YES, then the device identification will succeed 146. The default mode may be useful, as otherwise the device identification may succeed before it is found out whether the access point 230 is trusted or not.

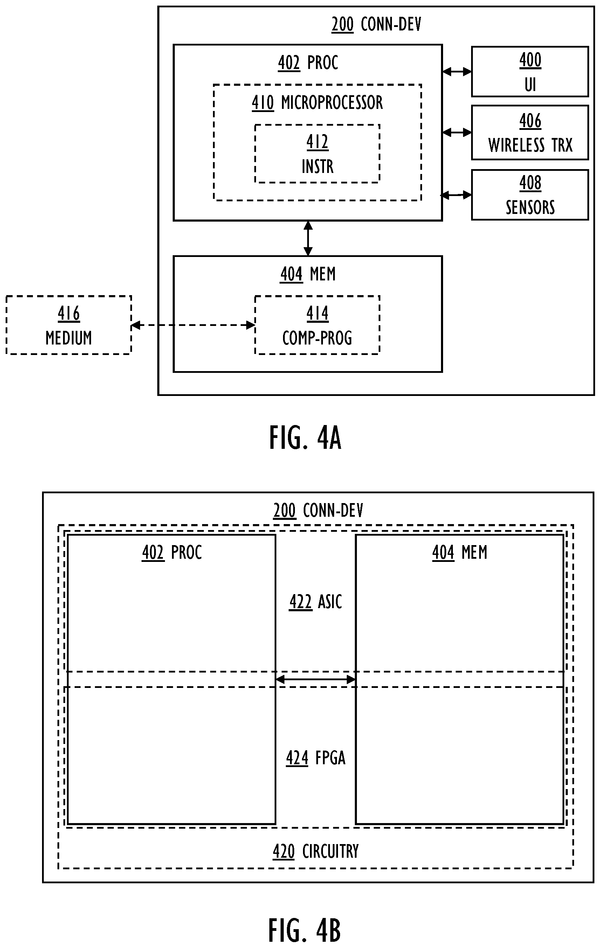

FIG. 4A and FIG. 4B are block diagrams illustrating an example of the connected device 200. The connected device 200 may be a terminal, a user equipment (UE), a radio terminal, a subscriber terminal, a smartphone, a mobile station, a mobile phone, a desktop computer, a portable computer, a laptop computer, a tablet computer, a smartwatch, smartglasses, another kind of ubiquitous computing device, or some other type of a wired or wireless mobile or stationary communication device operating with or without a subscriber identification module (SIM) or an embedded SIM (eSIM). The connected device 200 may be a personal communication device of the user 204. The connected device 200 may also be an Internet of Things (IoT) device, which is provided with processing and communication technology and may also include one or more sensors and a user interface, and may be a stand-alone device, or an embedded device in a lighting fixture, thermostat, home security system, camera, smart lock, smart doorbell, smart refrigerator, or another household appliance, heating and cooling system, home and building automation system, vehicle, health and fitness monitor, remote health monitoring system, environmental sensor, IP camera, or network attached storage (NAS), etc.

As shown in FIG. 4A, the connected device 200 comprises one or more memories 404, and one or more processors 402 coupled to the one or more memories 404 configured to carry out the operation of the connected device 200. In addition, the connected device 200 may comprise a user interface 400 (such as a touch screen or one or more light-emitting diodes, LEDs), and one or more wireless transceivers 406 (such as a WLAN transceiver, a cellular radio network transceiver, and a short-range radio transceiver), and also one or more sensors 408.

The term "processor" 402 refers to a device that is capable of processing data. The term "memory" 404 refers to a device that is capable of storing data run-time (= working memory) or permanently (= non-volatile memory).

As shown in FIG. 4A, the one or more processors 402 may be implemented as one or more microprocessors 410, which are configured to execute instructions 412 of a computer program 414 stored on the one or memories 404. The microprocessor 410 implements functions of a central processing unit (CPU) on an integrated circuit. The CPU is a logic machine executing the instructions 412 of the computer program 414. The CPU may comprise a set of registers, an arithmetic logic unit (ALU), and a control unit (CU). The control unit is controlled by a sequence of the instructions 412 transferred to the CPU from the (working) memory 404. The control unit may contain a number of microinstructions for basic operations. The implementation of the microinstructions may vary, depending on the CPU design. The one or more microprocessors 410 may be implemented as cores of a single processor and/or as separate processors. Note that the term "microprocessor" is considered as a general term including, but not being limited to a digital signal processor (DSP), a digital signal controller, a graphics processing unit, a system on a chip, a microcontroller, a special-purpose computer chip, and other computing architectures employing at least partly microprocessor technology. The memory 404 comprising the working memory and the non-volatile memory may be implemented by a random-access memory (RAM), dynamic RAM (DRAM), static RAM (SRAM), a flash memory, a solid-state drive (SSD), PROM (programmable read-only memory), a suitable semiconductor, or any other means of implementing an electrical computer memory.

The computer program ("software") 414 may be written ("coded") by a suitable programming language, and the resulting executable code may be stored in the memory 404 and executed by the one or more microprocessors 410.

The computer program 414 implements the method/algorithm. The computer program 414 may be coded using a programming language, which may be a high-level programming language, such as Go, Java, C, or C++, or with a low-level programming language, such as an assembler or a machine language. The computer program 414 may be in source code form, object code form, executable file, or in some intermediate form, but for use in the one or more microprocessors 410 it is in an executable form as an application. There are many ways to structure the computer program 414: the operations may be divided into modules, subroutines, methods, classes, objects, applets, macros, etc., depending on the software design methodology and the programming language used. In modern programming environments, there are software libraries, i.e., compilations of ready-made functions, which may be utilized by the computer program 414 for performing a wide variety of standard operations. In addition, an operating system (such as a general-purpose operating system) may provide the computer program 414 with system services.

As shown in FIG. 4A, a computer-readable medium 416 may store the computer program 414, which, when executed by the connected device 200 (the computer program 414 may first be loaded into the one or more microprocessors 410 as the instructions 412 and then executed by one or more microprocessors 410), causes the connected device (or the one or more microprocessors 410) to carry out the software functionality of the connected device 200. The computer-readable medium 416 may be implemented as a non-transitory computer-readable storage medium, a computer-readable storage medium, a computer memory, a computer-readable data carrier (such as an electrical carrier signal), a data carrier signal (such as a wired or wireless telecommunications signal), or another software distribution medium capable of carrying the computer program 414 to the one or memories 404. In some jurisdictions, depending on the legislation and the patent practice, the computer-readable medium 416 may not be the wired or wireless telecommunications signal.

As shown in FIG. 4B, the one or more processors 402 and the one or more memories 404 may be implemented by a circuitry 420. A non-exhaustive list of implementation techniques for the circuitry 420 includes, but is not limited to application-specific integrated circuits (ASIC) 422, field-programmable gate arrays (FPGA) 424, application-specific standard products (ASSP), standard integrated circuits, logic components, and other electronics structures employing custom-made or standard electronic circuits.

Note that in modern computing environments a hybrid implementation employing both the microprocessor technology of FIG. 4A and the custom or standard circuitry of FIG. 4B is feasible.

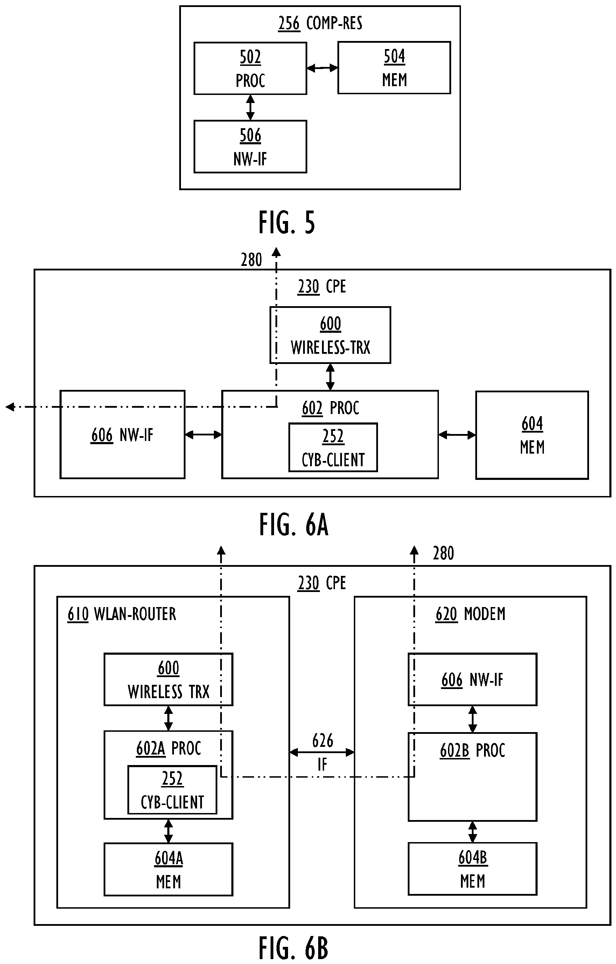

FIG. 5 is a block diagram illustrating an example of a computing resource 256 such as a server apparatus. The server apparatus 256 may be a networked computer server, which interoperates with the CPE 230 according to a client-server architecture, a cloud computing architecture, a peer-to-peer system, or another applicable distributed computing architecture. As shown in FIG. 5, the server apparatus 256 comprises one or more memories 504, and one or more processors 502 coupled to the one or more memories 504 configured to carry out the functionality of the cybersecurity server 254. In addition, the server apparatus 256 comprises a network interface (such as an Ethernet network interface card) 506 configured to couple the server apparatus 256 to the Internet 224.

FIG. 6A and FIG. 6B are block diagrams illustrating examples of an access point 230, such as a customer-premises equipment (CPE).

In FIG. 6A, the CPE 230 is an integrated apparatus comprising one or more memories 604, and one or more processors 602 coupled to the one or more memories 604 configured to carry out a part of the method/algorithm in some examples. Additionally, the CPE 230 comprises a wireless radio transceiver 600 configured to create the LAN 222 for enabling access by the connected device 200. The CPE 230 also comprises a network interface 606 to act as a modem configured to connect to the telecommunication circuit of the carrier at the demarcation point, i.e., to the WAN 224. The network interface 606 may operate as a Digital Subscriber Line (DSL) modem using different variants such as Very high bitrate DSL (VDSL), Symmetric DSL (SDSL), or Asymmetric DSL (ADSL). The network interface 606 may also operate using alternative wired or even wireless access technologies including, but not being limited to: the Data Over Cable Service Interface Specification (DOCSIS), the Gigabit-capable Passive Optical Network (GPON), the Multimedia over Coax Alliance (MoCA^{®}), the Multimedia Terminal Adapter (MTA), and the fourth generation (4G), fifth generation (5G), or even a higher generation cellular radio network access technology. The CPE 230 may be running the cybersecurity client 252.

In FIG. 6B, the CPE 230 is a two-part apparatus. A WLAN router part 610 comprises the one or more memories 604A, the one or more processors 602A coupled to the one or more memories 604A configured to carry out the method/algorithm, and the wireless transceiver 600 to create the LAN 222 for enabling access by the connected device 200. A modem part 620 comprises the one or more processors 602B coupled to one or more memories 604B configured to carry out modem operations, and the network interface 606 to act as the modem configured to connect to the WAN 224. The WLAN router part 610 may be purchased by the user 204 of the connected device 200 to gain access to a part of the method/algorithm, whereas the modem part 620 may be provided by a carrier providing the telecommunication circuit access. As shown in FIG. 6B, the WLAN router part 610 and the modem part 620 may be communicatively coupled by an interface 626 (such as a wired Ethernet interface). As shown in FIG. 6B, the platform may be provided by the one or more memories 604A, and the one or more processors 602A, but also additionally, or alternatively, by the one or more memories 604B, and the one or more processors 602B. Instead of the cybersecurity client 252, another component running on the CPE 230 may be configured to run a part of the algorithm implementing the method in some examples.

The CPE 230 may be implemented using proprietary software or using at least partly open software development kits. In an example, the Reference Design Kit for Broadband (RDK-B) may be used, but the implementation is not limited to that as it may be implemented in other applicable environments as well. At the time of writing of this patent application, more information regarding the RDK may be found in wiki.rdkcentral.com. Another alternative implementation environment is Open Wireless Router (OpenWrt^{®}), which is an open-source project for embedded operating systems of the CPE 230 based also on Linux. At the time of writing of this patent application, more information regarding the OpenWrt^{®} may be found in openwrt.org.

Even though the invention has been described with reference to one or more examples according to the accompanying drawings, it is clear that the invention is not restricted thereto but can be modified in several ways within the scope of the appended claims. All words and expressions should be interpreted broadly, and they are intended to illustrate, not to restrict, the examples. As technology advances, the inventive concept defined by the claims can be implemented in various ways.

## Claims

1. A method comprising:
randomly adjusting (102), by a connected device, a present carrier frequency of a present radio signal within an acceptable tolerance range; and
transmitting (108), by the connected device, the present radio signal to an access point in a present wireless connection.

2. The method of claim 1, wherein randomly adjusting (102), by the connected device, the present carrier frequency of the present radio signal within the acceptable tolerance range further comprises:
adjusting (104) the present carrier frequency so that the present carrier frequency is randomly different from one or more past carrier frequencies of one or more past wireless connections of the connected device.

3. The method of any preceding claim, wherein randomly adjusting (102), by the connected device, the present carrier frequency of the present radio signal within the acceptable tolerance range further comprises:
generating (122) a present random adjustment within the acceptable tolerance range;
in response to detecting (130) that the present random adjustment is different from one or more past random adjustments of one or more past wireless connections, using the present random adjustment;
in response to detecting (132) that the present random adjustment is similar to the one or more past random adjustments of the one or more past wireless connections, discarding the present random adjustment, and generating anew the present random adjustment within the acceptable tolerance range;
generating (134) the present carrier frequency with a local oscillator;
and
tuning (136) the present carrier frequency with the present random adjustment.

4. The method of claim 3, wherein generating (122) the present random adjustment within the acceptable tolerance range further comprises:
generating (124) the present random adjustment based on a random number.

5. The method of claim 3, wherein generating (122) the present random adjustment within the acceptable tolerance range further comprises:
randomly selecting (126) the present random adjustment from a set of possible adjustments.

6. The method of claim 5, wherein randomly selecting (126) the present random adjustment from the set of possible adjustments further comprises:
excluding (128) random adjustments used for the one or more past wireless connections of the connected device.

7. The method of any preceding claim, further comprising:
intercepting (112) the present radio signal transmitted to the access point in the present wireless connection;
generating (114) a present radio frequency fingerprint based on the present radio signal; and
failing (116) in a device identification of the connected device based on the present radio frequency fingerprint because the present radio frequency fingerprint mismatches with one or more past radio frequency fingerprints of the connected device.

8. The method of claim 7, wherein the present radio frequency fingerprint comprises a present carrier frequency offset of the connected device, which is different (118) from past carrier frequency offsets of the one or more past radio frequency fingerprints of the connected device.

9. The method of any preceding claim, further comprising:
in response to detecting (138-YES) that the access point fulfills a first predetermined condition, ceasing (142) to randomly adjust, by the connected device, the present carrier frequency of the present radio signal within the acceptable tolerance range; and
continuing (144) to transmit, from the connected device to the access point, the present radio signal in the present wireless connection.

10. The method of claim 9, wherein the first predetermined condition comprises a use of a private user authentication (140) controlled by a user managing the access point at a home or an office.

11. The method of claim 9 or 10, further comprising:
intercepting (112) the present radio signal transmitted to the access point in the present wireless connection;
generating (114) a present radio frequency fingerprint based on the present radio signal; and
succeeding (146) in a device identification of the connected device based on the present radio frequency fingerprint because the present radio frequency fingerprint matches with one or more past radio frequency fingerprints of the connected device.

12. The method of any preceding claim, further comprising:
in response to detecting (148-YES) that the access point fulfills a second predetermined condition, continuing (152) to randomly adjust, by the connected device, the present carrier frequency of the present radio signal within the acceptable tolerance range; and
continuing (154) to transmit, from the connected device to the access point, the present radio signal in the present wireless connection.

13. The method of claim 12, wherein the second predetermined condition comprises a use of a public user authentication (150) controlled by a network service provider managing the access point out of a home or an office.

14. The method of claim 12 or 13, further comprising:
intercepting (112) the present radio signal transmitted to the access point in the present wireless connection;
generating (114) a present radio frequency fingerprint based on the present radio signal; and
failing (116) in a device identification of the connected device based on the present radio frequency fingerprint because the present radio frequency fingerprint mismatches with one or more past radio frequency fingerprints of the connected device.

15. The method of any preceding claim, further comprising:
randomly adjusting (106), by the connected device, one or more present other characteristics of the present radio signal within one or more acceptable tolerance ranges of the one or more present other characteristics so that the one or more present other characteristics are randomly different from one or more past other characteristics of one or more past wireless connections;
intercepting (112) the present radio signal transmitted to the access point in the present wireless connection;
generating (114) a present radio frequency fingerprint based on the present radio signal; and
failing (116) in a device identification of the connected device based on the present radio frequency fingerprint because the present radio frequency fingerprint mismatches with one or more past radio frequency fingerprints of the connected device.

16. An apparatus comprising means for carrying out the method of any preceding claim 1-15.

17. A computer program product comprising instructions which, when executed by an apparatus, cause the apparatus to carry out the method of any preceding claim 1-15.
